# EUROPEAN PATENT APPLICATION

(11) **EP 1 914 487 A1**
(43) Date of publication of application: **23.04.2008**
(21) Application number: 06021963.1
(22) Date of filing: 19.10.2006
(51) Int. Cl.: F24H 3/00, C09K 5/10

(54) **Heat exchange system**

(71) Applicant: Wu, Chia-Hsiung, Taipei Taiwan (CN)
(72) Inventor: Wu, Chia-Hsiung, Taipei Taiwan (CN)
(74) Representative: Becker, Eberhard

(57) **Abstract**

A heat exchange system providing a heat medium in a loop circuit circulating heat exchanger to transfer heat, which mainly uses a water as base material, and the liquid state heat medium is formed by mixing the water with an improving agent or heat carrying particles. The heat medium is filled in a loop circuit heat exchange circulating path having an internal pressure space, and the internal pressure space is used to raise the boiling point and reduce freezing point phase transition temperatures of the water to comply with implementation needs. Hence, the present invention is able to achieve satisfactory strength of heat transfer and unequivocally resolve environmental issues.

## Description

### BACKGROUND OF THE INVENTION

### (a) Field of the Invention

The present invention relates to a heat exchange system, and more particularly to a heat exchange system that uses a water (H₂O) as base material, which functions in coordination with a heat exchange circulating path having internal pressure to satisfy heat transfer strength, and unequivocally resolving environmental issues.

### (b) Description of the Prior Art

In general, heat exchange devices are industrial constant temperature thermostat devices or circulating vane-type electric heaters for indoor heating, wherein mineral oil is used as the interior heat exchange medium. Although, specific heat of mineral is relatively low and easily absorbs heat, however, viscosity of the oil itself is relatively high and thus difficult to flow. Moreover, the oil material is heated by the high temperature of the electric heater, which often forms a carbonizing effect, and a coke layer forms on a surface of the heater that affects heating power, and the oil material easily degrades and loses effective heat carrying effect. In general, the oil material must be replaced every three years, and industrial users must replace the oil material every six months. After replacing with new oil, the waste oil then forms a substantial pollution problem, which is not generally accepted, especially in Japan, where it is resold.

Furthermore, over-temperature working of the electric heater results in accumulation of excess internal pressure that affects structural strength, which causes the piping joints to crack, and easily leads to the mineral oil igniting due to electric short circuiting form oil leakage, thereby resulting in fire causing injury to persons and damage to property.

The aforementioned pollution amount produced from the waste oil can be determined if volume of heat conducting oil required by each electric heater is approximately 5 liters, from current global annual production of more than thirty million electric heaters, after multiplication, we arrive at production of more than a hundred million liters of waste oil, which is a pollution hazard that cannot be overlooked. Moreover, low economic value and difficulty in establishing machine-processing recovery of the waste oil creates an obvious source of environmental contamination.

### SUMMARY OF THE INVENTION

A primary objective of the present invention is to provide a heat exchange system that uses a water (H₂O) as a base material, which is mixed with an improving agent to serve as a heat medium. Physical properties of the heat medium improves heat carrying conditions and phase transition temperatures, and is implemented within a loop circuit type heat exchange path having an internal pressure to broaden the scope of the water phase transition temperatures, thereby meeting the functional requirements for heat exchange, and achieving satisfactory strength of heat transfer.

Another objective of the present invention is to fill the water with high heat conducting heat carrying particles, thereby achieving effectiveness of rapid heat delivery.

A second objective of the present invention is to enable a path space of the loop circuit heat exchange system to accept pressure, thereby producing a relatively high internal pressure, and increasing water boiling point temperature.

A third objective of the present invention is to fill the path space of the loop circuit heat exchange system with the heat medium, wherein volumetric percentage of the heat medium is approximately between 70 and 85%, thereby retaining a space to assimilate expansion.

A fourth objective of the present invention is to add an antifreeze to the water to resist low temperatures by reducing coagulation temperature of the water.

Accordingly, embodiments of the present invention have the following advantages:
1. Provided with non-polluting and noninflammable safety characteristics.
2. No environmental recovery problems when discarded.
3. No environmental pollution problems if there is system leakage.
4. Because noninflammable, household objects, such as carpets, and so on, will not be contaminated or form a combustion supporting action after leakage.

To enable a further understanding of said objectives and the technological methods of the invention herein, brief description of the drawings is provided below followed by detailed description of the

### preferred embodiments.

### BRIEF DESCRIPTION OF THE DRAWINGS

FIG. 1 shows a general view of a heat exchange system according to the present invention.
FIG. 2 shows an application drawing of an electric heater according to the present invention.
FIG. 3 shows a side view of FIG. 2.
FIG. 4 shows a schematic view of disposition of a heater according to the present invention.
FIG. 5 shows a front view of preset weak points of a vane-type electric heater according to the present invention.
FIG. 6 shows a side view of the preset weak points of the vane-type electric heater according to the present invention.
FIG. 7 shows a side view of the preset weak points and safety devices of the vane-type electric heater according to the present invention.

### DETAILED DESCRIPTION OF THE PREFERRED EMBODIMENTS

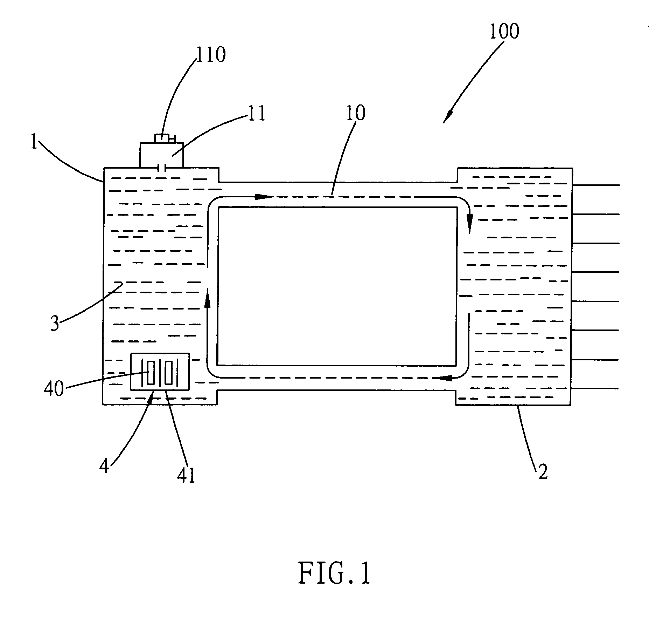

Referring to FIG. 1, which shows a heat exchange system 100 of the present invention, wherein the heat exchange system 100 is provided with a heat absorption end 1 that links up with a heat-sink end 2 by a circulating path 10. The circulating path 10 is filled with a heat medium 3, which also connects the heat absorption end 1 and the heat-sink end 2. An embodiment of the heat exchange system 100 located in an electronic machine cooling system can use a wind motor located at an outer end of the heat-sink end 2 to dissipate heat, and the heat absorption end 1 can be located in close contact with the heat generating electronic components.

If the heat exchange system 100 is used as an indoor warmer to heat the surrounding air temperature, then a heater 4 is utilized to generate heat to the heat medium 3. Electrothermal operation of the heater 4 uses an electrothermal device 40 to produce heat, and the electrothermal device 40 is enclosed in a heat conducting case 41.

Filled path of the heat medium 3 of the heat exchange system 100 is provided with a holding space that is able to resist internal pressure, and resistance to internal pressure is used to raise the water boiling point temperature. When a general water (H₂O) absorbs heat raising the water temperature to 100°C, then the water undergoes vaporization, and the vaporization produces an expansion pressure that jeopardizes the structure of a heat exchange system. Apart from temperature, a significant condition for transformation of a water (H₂O) from a liquid state to a gaseous state is the relationship between pressure and boiling point. The Clapeyron equation ΔP/ΔT=λ/T(V₂-V₁) , wherein λ is the latent heat, T is the boiling point, V₂ is volumetric ratio of the gaseous state, V₁ is volumetric ratio of the liquid state, from which it can be known that when the pressure is large, then the boiling point is raised, that is, in a pressure vessel, boiling point temperature of water is in direct proportion to size of the pressure value, thus boiling point temperature of the water can be raised.

The concept of a pressure vessel in an embodiment of the present invention enables raising the boiling point of the water to approximately 125°C, conditions for such being that internal pressure of the heat exchange system 100 has a prerequisite pressure value of 0.15Mpa. Based on experiments using the present invention, boiling point of aqueous solutions under atmospheric pressure (normal pressure) is around 100°C, and the boiling point is raised to approximately 120°C when a hermetically sealed container at a pressure of 0.1 Mpa is used. If internal pressure is set to 0.15Mpa, then the boiling point is raised to approximately 125°C, which complies with the UL (Underwriters Laboratories) international safety standards of below 130°C, or in order to comply with the European IEC (International Electro-technical Commission) standards of below 110°C, then the internal pressure can be correspondingly adjusted to be lower to effect a boiling point temperature below 110°C. The aforementioned safety standard temperatures are applicable for indoor heating vane-type electric room heaters temperature raising specifications, wherein a safe temperature is used to appropriately enable an electric room heater to emit a quantity of heat and gradually raise indoor temperature.

Preferred volumetric ratio of the heat medium 3 filled within the internal path space of the heat exchange system 100 is approximately 70-85%, thereby retaining approximately 15-30% static state space of the path space. The retained space is able to assimilate expansion volume of the heat medium 3 after an anomalous phase transition, for instance, expansion volume produced when the ambient temperature falls to below freezing point causing the heat medium 3 to freeze, or abnormal working of a electric heater causes a gaseous inflationary pressure from the expansion volume after temperature of the heat medium 3 exceeds its boiling point phase transition, thereby providing the retained space with functionality to provide advanced safety protection.

A water in contact with a surface of a heater renders heat energy thereto, and under circumstances whereby a point heat energy at a microunit area is comparatively high and flow velocity of the water is relatively inadequate, then the water in contact with the microunit area will rapidly rise in temperature and vaporize to form a spherical bubble. Moreover, a tangent plane of the bubble is cross cut at a surface of a heater and forms an boiling bubble. In order to resolve such a situation, the present invention provides the following proposal:

Specific heat of water is greater than that of mineral oil and temperature rises slowly, thus, methods to resolve boiling bubbles forming from overheating at the surface of a heater:
1. Adding of heat conducting particles to the water to rapidly conduct away high temperature from the surface of the heater and speed up separating the bubbles therefrom, thereby accelerating removing the bubbles.
2. Defining a plurality of pores in the surface of the heater, and using the concave-convex drop height structure of the rough pore surface and two point temperature difference to prohibit stable settling of bubbles produced, thus dispersing the bubbles.
3. Disposition of a reticular structure on the surface of the heater, and using wire bars of the reticular structure to destroy the air bubble structure and decompose the air bubbles.
4. Linking the heater to an ultrasonic vibration device, and using oscillating energy to separate and displace connecting portions between the air bubbles and the surface of the heater, and the cohesive force of water pressure and water causes the bubbles to separate from the surface of the heater.
5. Using a power control method to enable maintaining power produced at each mm² of average surface area of the electric heater below 0.04W, thereby effectively preventing boiling bubbles from occurring.

In general, object of a heat exchange system used for heating is to rapidly deliver heat energy from a heater towards a destination, where it is released, and the higher the speed of delivery, the better. A problem of prior art is its use of mineral oil, which has a viscosity property that produces a back flow and tardiness, and such tardiness may result in piping stratosphere, and central heat is unable to come in close contact with surfaces of pipe walls or heat sink end structural components, thereby losing heat exchange functionality.

The present invention uses water with low viscosity, thereby increasing circulating velocity of the water, which easily results in turbulent flow because of the increased flow velocity. The turbulent flow can be used to enable heat carried by the heat medium 3 center of the path 10 to easily mix with periphery heat medium and make close contact with wall surfaces of the piping, thereby easily achieving turbulent flow between center point within the piping and periphery water, which enables the periphery water in close contact with the wall surfaces of the piping to effect outward heat exchange.

In order to improve physical properties of the heat medium 3 of the present invention, a percentage of the water (H₂O) can be filled with 15-50% of an improving agent. The improving agent is a preservative or an insulating compound or a glycol antifreeze, wherein using a glycol antifreeze can reduce coagulation temperature to approximately between -15 and -40°C. Hence, when used in an intense cold home environment, the heat medium 3 is prevented from freezing and unable to flow.

The present invention further fills the heat medium 3 with low specific heat carrying particles, such as metallic minute particles or oxide minute particles. The aforementioned minute particles can be nano-sized particles to enable the water to easily carry the particles, and the low specific heat characteristic of the heat conducting particles is used to enable the heat absorption end 1 to easily absorb heat and the fast conveyance of the water to the heat sink end 2 to rapidly release the heat energy thereat.

The nano-sized minute particles are added to a water soluble dispersant agent, thereby achieving uniform and stable distribution of the nano-sized minute particles in a water base liquid state disseminator.

The heat medium 3 can further use pure water as a base material, thereby preventing impurities and maintaining stable physical properties. In addition, the heat medium 3 can also use hard water and soft water for maintaining different physical properties.

The heat medium 3 flow distribution path of the heat exchange system 100 is provided with a compressive property, whereby prior to filling with the heat medium 3, the heat exchange system 100 can be operated in a vacuum state or a negative pressure can be formed by thermal state filling, whereafter the heat exchange system 100 is filled with the heat medium 3 using a vacuum fill method or negative pressure fill method, thereby preventing a residual of internal air, which would otherwise cause degeneration of the heat exchange system 100.

An embodiment using the aforementioned vacuum fill method must utilize a surge tank 11 joined at a position close to the heat absorption end 1. The surge tank 11 absorbs excessive pressure and prevents a high pressure occurring within the heater 4 when an abnormal state is produced because of an unstable current, thus serving as a pressure buffer and effecting abnormal state safety protection. A pressure release valve 110 is further located on the surge tank 11.

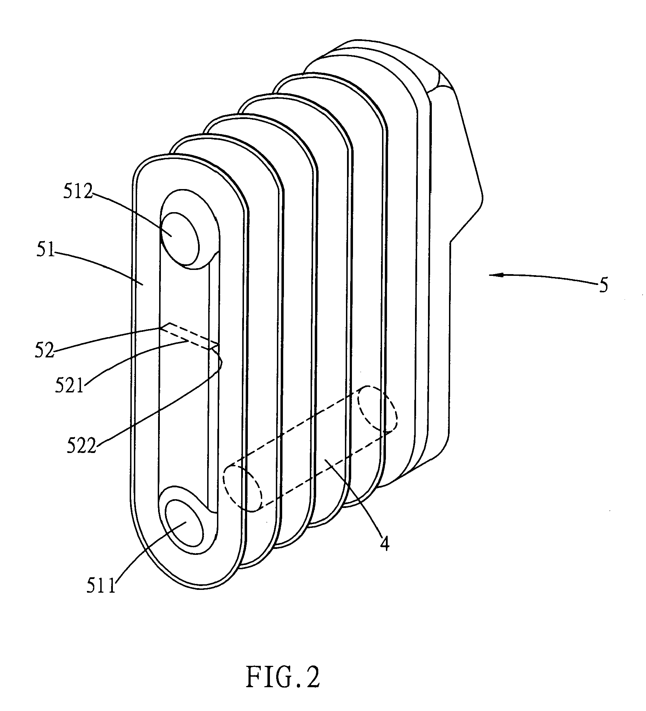

Referring to FIG. 2, which shows an embodiment of the present invention applied in a vane-type electric heater 5 that comprises a plurality of juxtaposed vanes 51, and a flow split side 511 and a flow combine side 512 link and join lower and upper ends of the vanes 51 respectively. The heater 4 is located within the flow split end 511, and a piping 52 is located in each of the vanes 51 disposed between the flow split end 511 and the flow, combine 512, which have a long hole-shaped cross section. Preferred ratio of a long side 521 to a short side 522 of the cross section is 6:1.

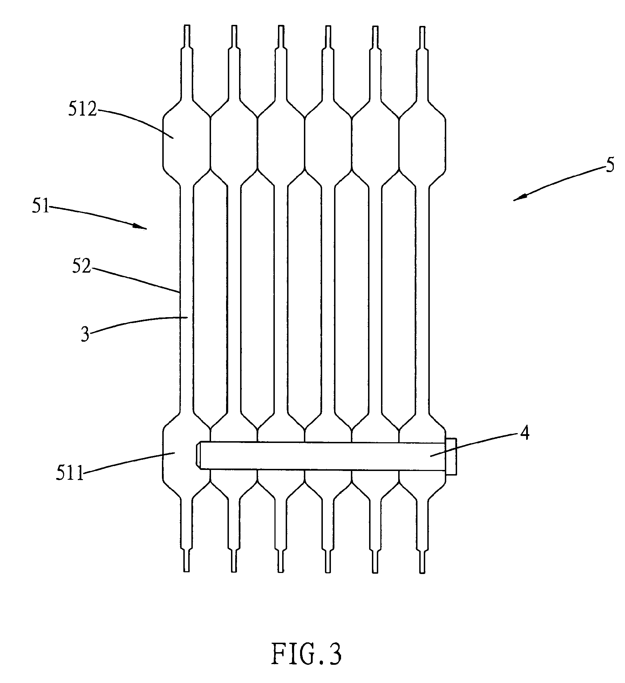

Referring to FIG. 3, which shows the vane-type electric heater 5 structured to comprise the plurality of vanes 51, the lower and upper ends of which are joined by means of the flow split side 511 and the flow combine side 512, thereby forming a circulating circuit. The heater 4 having electrothermal functionality is located interior of the flow split side 511, and causes the heat medium 3 interior of the heater 4 to generate heat energy. After raising the temperature, the heat medium 3 floats upward through the piping 52 configured in the vanes 51, and the motive force of the flow process of the heat medium 3 results from the heating effect of the heater 4 causing heat to effect a dynamic flow state effect, and the flow effect is used to achieve a circulating cool-heat back flow movement line.

Because of the low viscosity of the water, thus, the water is able to rapidly flow within the piping 52, and flow velocity of the rapid flowing water enables the heat medium 3 within the path to produce a turbulent flow, which easily makes contact with interior walls of the piping 52, thereby effecting a heat exchange between the heat medium 3 and the interior walls of the piping 52.

Furthermore, a configuration using the 6:1 ratio of the long side 521 to the short side 522 cross section of the piping 52 (see FIG. 2) enables the short sides 522 to draw close the relative distance of the inner walls of the long sides 521, whereafter a turbulent flow value can be determined according to Reynolds number, which is calculated using the formula: water density ρ x water velocity V x inner side distance D / viscosity factor µ, wherein if value of the short side is relatively small, then value of D is correspondingly relatively small, which easily results in surmounting the critical Reynolds number, and thus flow within the piping 52 is prone to turbulent flow. According to experimental results using the present invention, after applying multiplication of water viscosity factors, preferred ratio (D value) of long side to short side cross section of the piping 52 is 6:1.

The aforementioned piping configuration of the present invention that uses the short sides 522 to draw close the relative distance of the inner wall surfaces of the long sides 521, then calculation of related Reynolds numbers enables reducing D values.

Basic principle of the Reynolds number is determined from the formula: water density ρ x water velocity V x inner side distance D / viscosity factor µ" from which it can be known that when the value of D is reduced, then the critical value of the Reynolds number is relatively low, which easily results in a turbulent flow within the piping 52, of course the aforementioned formula is similarly able to calculate turbulent flow value for a circular cross section pipe body, wherein existence of velocity is already determined from a definite area and pressure, and meaning of the D is relative distance of the inner pipe walls, and from the formula for Reynolds number it can be known that if the density ρ is enlarged due to a heating effect, then it will result in slowing down the critical Reynolds number, however, change in value is not great or obvious. The viscosity factor µ is determined according to property of the water.

The aforementioned method using power control to prevent the surface of a heater from forming boiling bubbles can utilize adjusting the surface area of the heater to accommodate different amounts of power, and may be implemented on different heaters of any size by homogenizing heat conduction amount of unit mm² area according to power value. Moreover, is able to satisfactorily add heat to the heat medium 3 within a unit time.

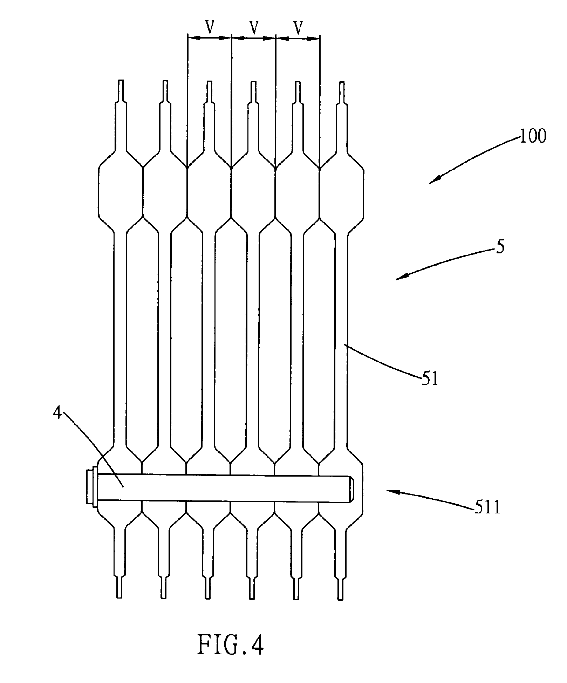

Referring to FIG. 4, which shows implementation of the heat exchange system 100 of the present invention in the electric heater 5, wherein the heater 4 is configured within the flow split side 511 of the electric heater 5. The heater 4 is a rod-shaped body having equal periphery measurements and definite length. Interior space of each of the vanes 51 is deemed to be of unit volume V, then a plurality of volume spaces V are segmented according to number of the plurality of vanes 51.

When temperature is low and the heat medium 3 freezes, because volume of the heat medium 3 expands upon freezing, which produces an internal pressure, and volume expands according to size of volume space in a geometric progression of size difference, for example, after geometric expansion of a 100cc space and a 90cc space, difference in original volume size and difference in geometric progression produces different volumetric phase transitions in the final frozen volume. In order to homogenize unit internal volume of each vane and enable homogenizing volume expansion after freezing, homogenize arrangement of volume space of each of the vanes 51 is carried out. Basically, longitudinal length of the rod-shaped heater 4 is equally extended left and right to at least enable ends of the heater 4 to reach lower portions of the vanes 51 at opposite ends. Moreover, size of volumetric space within each of the vanes 51 is relatively uniform, and thus, during the course of a freezing phase transition expansion, expansion ratio within the volumetric space of each of the vanes 51 is relatively homogenized, thereby preventing an excessive load on an inner wall of a single vane resulting in cracking, and thereby controlling equalization of service life of each of the vanes 51. Furthermore, because of volumetric connective contact with a heat source, thus, each of the vanes 51 acquire an equal quantity of heat when operating.

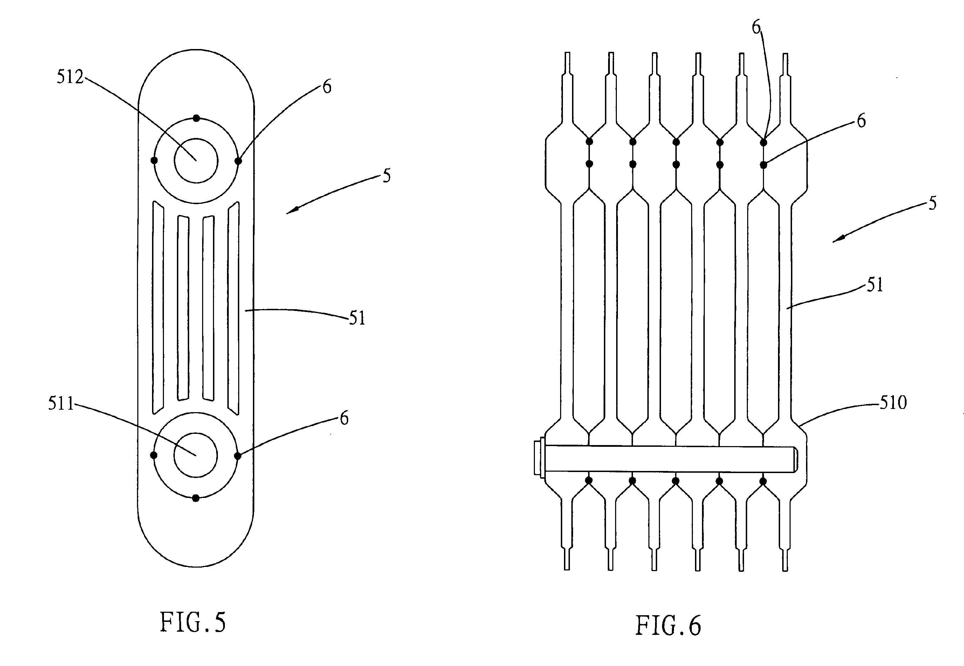

Referring to FIG. 5, which shows the flow split side 511 and the flow combine side 512 joining the lower and upper ends of the configured vanes 51 of the electric heater 5 respectively, and FIG. 6 depicts formation of the flow combine side 512, wherein a cup-shaped protuberance 510 bulges at the lower and upper ends of each of the vanes 51. Outward openings of the protuberances 510 are opposite combined using a heat soldering method to hermetically join them, thereby enabling the plurality of vanes 51 to be combined together in a parallel configuration. A plurality of pre-collapse soldering points (weak points) 6 are formed during the process of soldering. Existence of the pre-collapse points 6 enable providing final safety protection when all protective devices fail, such as under circumstances when pressure release valve fail. If the pressure release valve fails, internal pressure continuously increases along with the heater 4, at such a time, the preset pre-collapse soldering points 6 will first split apart to provide release of pressure, thereby safeguarding safety of other structures of the entire system. In general, when the internal pressure increases to 0.4 - 0.5Mpa, then the pre-collapse soldering points 6 will split apart enabling excessive pressure to be released therefrom. Because the pre-collapse soldering points 6 are formed using heat, thus, heat soldering can be similarly used again when repairing the pre-collapse soldering points 6, thereby eliminating the need for other product components, and achieving a minimum finished product providing safety protection.

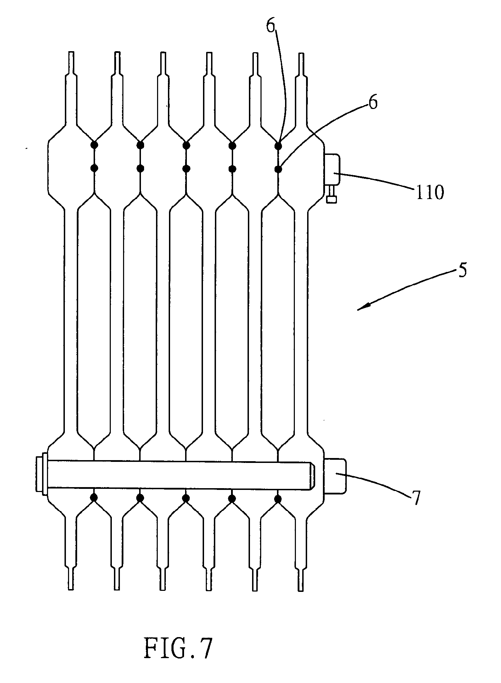

Referring to FIG. 7, a general soldering point is able to withstand a pressure of 10mpa, and implementation of the aforementioned pre-collapse soldering points 6 is such to be able to withstand mechanical conditions at least greater than or equal to temperature and pressure of water in normal operating mode, or the present invention can be supplemented with other safety devices, such as the pressure release valve 110 or a temperature switch 7 able to sense too high a temperature and automatically disconnect the power supply. The temperature switch 7 is set at a safe temperature according to physical properties of temperature and pressure of the heat medium used.

For instance, when pressure reaches 0.15mpa, then corresponding temperature is approximately 120°C , and operating temperature of the temperature switch 7 is set at above 120°C , thereby enabling maintaining an operating temperature of 120°C required by the electric heater 5 and ensuring a safe pressure. The aforementioned auxiliary conditions are that degree of pressure resistance of the soldering points 6 must be at least over 0.15mpa.

Test results on the present invention show that when pressure is 0.12mpa, then boiling point temperature of the heat medium is 105°C , and when pressure is 0.15mpa, then boiling point temperature of the heat medium is 120°C , and using a coordinate system as a function of pressure and temperature, if a graph of temperature-pressure relationships is a straight line, then from the aforementioned two sets of corresponding values, using the formula y = ax+b, it can be calculated that if pressure resistance of the soldering points 6 is set at 0.3mpa, then a boiling point temperature up to 195°C is able to be sustained (according to physical properties of the medium, the graph may be a curve). Hence, under circumstances wherein the temperature cannot exceed the boiling point temperature, degree of pressure resistance of the soldering points 6 is set at slightly higher than the boiling critical temperature of the heat medium according to operating temperature requirements, (retrieval and relationship of pressure and temperature is according to the aforementioned corresponding values, and for a specific heat medium).

Safety measures implemented in the safety design of the present invention include disposition of the mechanical pressure release valve 110, wherein the power supply is simultaneously cut off when the pressure release valve 110 is actuated, disposition of the temperature switch 7, which is set to a power-off operating temperature according to pressure resistance requirements, and state of the relative pressure of the pre-collapse soldering points 6, which are set in advance to crack to relieve the danger.

The aforementioned safety devices, serve as complementary operations that function in sequence. For instance, the pressure release valve 110 or the temperature power-off switch 7 can serve as pre-safety protection measures, and final guard lines are the pre-collapse soldering points 6. For example, when the temperature exceeds a required value for operation, with corresponding increased internal pressure, then the temperature power-off switch 7 serves as the pre-safety protection measure and cuts off the power supply, or if pressure exceeds a set value, then the pressure release valve 110 serves to release pressure or intercept and cut off the power supply. If the aforementioned two lines of defense fail, there are still the pre-collapse soldering points 6 which can serve as a terminal line of defense, thereby completely and effectively protecting safety of the surroundings.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A heat exchange system comprising a heat absorption end, which is linked by means of a circuit through a path to a heat sink end, and a heat medium filled within the path, wherein, the heat medium filled within the path uses a water (H₂O) as a base material, and the water is mixed with a physical property improving agent.

2. The heat exchange system according to claim 1, wherein percentage of the improving agent is between 15 and 50%.

3. The heat exchange system according to claim 1, wherein the improving agent is a glycol antifreeze.

4. The heat exchange system according to claim 1, wherein the improving agent is an insulating compound.

5. The heat exchange system according to claim 1, wherein the improving agent is a preservative.

6. The heat exchange system according to claim 1, wherein the improving agent is high thermal conducting heat carrying particles.

7. The heat exchange system according to claim 6, wherein the heat carrying particles are metallic minute particles.

8. The heat exchange system according to claim 6, wherein the heat carrying particles are oxide compounds.

9. The heat exchange system according to claim 7, wherein the metallic minute particles are nano-sized metallic particles.

10. The heat exchange system according to claim 1, wherein the water is pure water.

11. A heat exchange system comprising a heat absorption end, which is linked by means of a circuit through a circulating path to a heat sink end, and a heat medium filled within the path, wherein, the circulating path is a heat exchange system circulating path having resistance to internal pressure, the heat medium filled within the circulating path uses a water (H₂O) as a base material, and the water is mixed with a physical property improving agent.

12. The heat exchange system according to claim 11, wherein volumetric percentage of the heat medium filled within the heat exchange system circulating path is between 70 and 85%.

13. The heat exchange system according to claim 11, wherein the heat exchange system circulating path is a vane piping, and cross section of the vane piping is long hole-shaped.

14. The heat exchange system according to claim 13, wherein the long-holed cross section has a long side and a short side, and ratio of the long side to the short side is 6:1.

15. The heat exchange system according to claim 11, wherein the heat medium is filled with 15 - 50% of improving agent.

16. The heat exchange system according to claim 15, wherein the improving agent is a glycol antifreeze.

17. The heat exchange system according to claim 15, wherein the improving agent is a preservative.

18. The heat exchange system according to claim 15, wherein the improving agent is an insulating compound.

19. The heat exchange system according to claim 11, wherein the heat medium is filled with heat conducting particles.

20. The heat exchange system according to claim 19, wherein the heat conducting particles are metallic minute particles.

21. The heat exchange system according to claim 19, wherein the heat conducting particles are oxide compounds.

22. The heat exchange system according to claim 20, wherein the metallic minute particles are nano-sized metallic particles.

23. The heat exchange system according to claim 21, wherein the oxide compounds are nano-sized oxide compound particles.

24. The heat exchange system according to claim 11, wherein the water is pure water.

25. The heat exchange system according to claim 11, wherein the heat exchange system is a vane-type electric heater system, and a heater of equal volume is uniformly distributed at a lower end of all vanes.

26. The heat exchange system according to claim 11, wherein the heat exchange system is a vane-type electric heater, and pre-collapse soldering points (weak points) are formed at joining portions of juxtaposed protuberances of each vane.
